# FASCICULE DE BREVET EUROPEEN

(11) **EP 2 834 382 B1**
(45) Date de publication et mention de la délivrance du brevet: **08.08.2018**
(21) Numéro de dépôt: 13720454.1
(22) Date de dépôt: 05.04.2013
(51) Int. Cl.: C04B 41/90, C04B 35/628, C23C 2/02, C23C 2/26, C23C 2/38, C04B 35/565, C04B 41/88, C23C 2/00, C04B 41/00, C04B 41/45, C04B 41/52, C23C 2/04, C22C 47/04, C22C 49/14, C04B 111/00

(54) **PROCEDE D'ENDUCTION D'UNE FIBRE AVEC PRE-ENDUCTION**
VERFAHREN ZUM BESCHICHTEN EINER FASER MIT VORBESCHICHTUNG
METHOD FOR COATING A FIBRE WITH PRE-COATING

(30) Priorité: 06.04.2012 FR 1201042
(43) Date de publication de la demande: 11.02.2015
(73) Titulaire: Safran Aircraft Engines, 75015 Paris (FR); Centre National de la Recherche Scientifique, 75016 Paris (FR); Université de Bordeaux 1, 33400 Talence (FR); Institut Polytechnique de Bordeaux, 33400 Talence (FR)
(72) Inventeur: FRANCHET, Jean-Michel Patrick Maurice, 77550 Moissy-Cramayel Cedex (FR); KLEIN, Gilles Charles Casimir, 77550 Moissy-Cramayel Cedex (FR); SANCHEZ, Gérald, 74230 Dingy St Clair (FR); LEPETITCORPS, Yann, 33850 Leognan (FR); ARQUIS, Eric, 33700 Merignac (FR); VERMAUT, Delphine, 09100 Arvigna (FR)
(74) Mandataire: Henrich, Christel
(86) Numéro de dépôt international: PCT/FR2013/050752
(87) Numéro de publication internationale: WO 2013/150251

(56) Documents cités:
- EP-A1- 0 358 803
- EP-A1- 1 995 342
- FR-A1- 2 891 541
- FR-A1- 2 945 823

## Description

FR2891541, FR2945823, EP19954342 décrivent des procédés d'enduction métallique de fibres par voie liquide et EP0358803 décrit un procédé par dépôt plasma.

La présente invention se situe dans le domaine de la fabrication de pièces en composite à matrice métallique. L'invention concerne un procédé de dépôt d'un revêtement d'un premier alliage métallique sur une fibre s'étendant selon une direction principale D selon la revendication 1.

Le procédé comprend au moins les étapes suivantes :
(a) On fournit une première masse d'un premier alliage métallique et on chauffe cette première masse au-dessus de sa température de fusion de telle sorte que ce premier alliage est à l'état liquide et occupe un espace E1,
(b) On translate cette fibre de l'amont vers l'aval au travers de cette première masse liquide selon la direction dans laquelle la fibre s'étend à une première vitesse V1 de telle sorte que cette fibre se recouvre, sur au moins une portion de sa longueur, d'un revêtement de ce premier alliage d'épaisseur non nulle sur toute sa périphérie dans un plan perpendiculaire à la direction principale D.

Dans certaines applications, notamment en aéronautique dans les pièces de turbomachines, les pièces en composite à matrice métallique renforcées par des fibres, par exemple des fibres céramiques, offrent un potentiel très intéressant.

En effet, ces composites présentent des performances en raideur et en résistance mécanique élevées, et le renforcement des fibres permet un gain de masse par rapport à une pièce à performances équivalentes mais réalisée dans le même alliage métallique sans renforcement fibreux.

Un tel composite est fabriqué à partir d'un semi-produit qui est une fibre de renforcement revêtue d'un revêtement métallique formant une gaine autour de cette fibre. L'alliage de ce revêtement métallique est le même que l'alliage de la matrice dans laquelle les fibres ainsi gainées sont destinées à être noyées lors de l'étape de fabrication ultérieure.

Pour revêtir la fibre de cet alliage métallique, on peut par exemple déposer cet alliage par dépôt en phase vapeur sous champ électrique, par évaporation thermique, par électrophorèse à partir de poudre métallique.

Dans la description qui suit les termes "amont" et "aval" sont définis par rapport au sens de translation de la fibre.

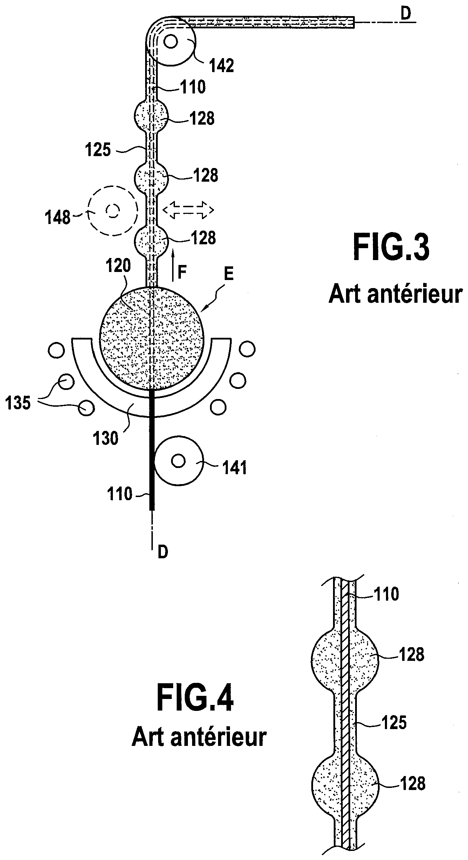

Le brevet EP 0,931,846 décrit un procédé de dépôt d'alliage sur un fibre par voie liquide (appelé « enduction » de la fibre). Ce dispositif est décrit en référence à la figure 3.

On chauffe une masse 120 de cet alliage jusqu'à ce qu'il soit liquide, puis on translate une fibre 110 selon sa direction principale (axe central de la fibre) au travers de cette masse 120 liquide. La fibre 110 s'étend entre une poulie amont 141 et une poulie aval 142 situées de part et d'autre de la masse 120, par rapport auxquelles elle est apte à coulisser. Pour ne pas laisser la fibre 110 trop longtemps au contact du métal d'alliage 120 en fusion et risquer de l'endommager, on maintient initialement la fibre 110 écartée de la masse d'alliage 120 pendant le chauffage de cette masse 120, à l'aide d'une poulie 148 qui est située sur la partie de la fibre 110 s'étendant entre la poulie amont 141 et une poulie aval 142. Ainsi la fibre 110 ne touche pas la masse 120 d'alliage. Une fois que la masse 120 est liquide, on fait coulisser la fibre 110 entre ces deux poulies de la poulie amont 141 vers la poulie aval 142, et on rapproche progressivement la fibre 110 de la masse 120 d'alliage en translatant la poulie 148 jusqu'à ce que la fibre 110 entre en contact avec cette masse 120, comme représenté en figure 3 (la double flèche horizontale montre le mouvement de translation de la poulie 148, qui à l'issue de son mouvement ne touche plus la fibre 110). La portion de la fibre 110 qui a traversé la masse 120 liquide se recouvre alors d'un revêtement 125 d'alliage d'une épaisseur donnée.

Dans cette technologie, la masse liquide 120 est maintenue en lévitation dans un creuset 130 dans lequel elle est chauffée par un chauffage 135, ce qui présente l'avantage que la masse 120 d'alliage n'est pas contaminée par le matériau constituant le creuset 130.

Cette méthode présente cependant des inconvénients. En effet, pour obtenir sur la fibre un revêtement 125 d'alliage dans certains intervalles d'épaisseurs (par exemple des épaisseurs de l'ordre de 50 microns (µm)), il est nécessaire que la fibre 110 traverse la masse liquide 120 d'alliage à une vitesse élevée. Or lorsque la vitesse de la fibre 110 au travers de la masse 120 liquide d'alliage est trop élevée (au-delà de plusieurs mètres par seconde), le temps de contact entre la fibre 110 et l'alliage est trop faible pour que la fibre soit complètement mouillée par l'alliage liquide, ce qui a pour conséquence d'empêcher la fibre 110 de pénétrer dans la masse 120 d'alliage, de telle sorte que la fibre 110 reste en périphérie de la masse 120 d'alliage. Ainsi, par ce procédé, on ne parvient à revêtir la fibre 10 au maximum que sur environ les trois-quarts de sa périphérie (dans un plan transversal perpendiculaire à la fibre rectiligne).

Afin d'améliorer le mouillage de la fibre 110 à des vitesses élevées, une solution consiste à déposer sur la fibre 110 par dépôt chimique réactif en phase vapeur (RCVD) un composé mouillable par le métal de l'alliage. Ce procédé est décrit dans le brevet FR 2,891,541.

Il est alors possible de faire passer la fibre 110 au travers (au milieu) de la masse 120 d'alliage, comme représenté en figure 3, et d'obtenir un dépôt d'alliage sur la fibre 110.

Cependant, ce procédé présente des inconvénients. En effet, il se produit des phénomènes d'expulsions sporadiques d'alliage en sortie de la masse 120, qui se traduisent par la formation de gouttelettes d'alliage sur la fibre 110 à intervalles plus ou moins réguliers.

Cette situation est illustrée en figure 4, qui montre une fibre 110 en coupe longitudinale en sortie de masse 120 d'alliage, et les gouttelettes 128.

Ces gouttelettes 128 sont indésirables, notamment car elles empêchent une répartition homogène des fibres 110 au sein du composite une fois qu'elles sont noyées dans la matrice du composite. De plus, elles entrainent une rupture de la fibre lorsqu'elles atteignent la poulie aval 142.

La présente invention vise à remédier à ces inconvénients.

L'invention vise à proposer un procédé qui permette d'empêcher la formation de ces gouttelettes tout en conservant un passage de la fibre au travers de la masse d'alliage même à des vitesses élevées.

Ce but est atteint grâce au fait que, avant l'étape (a), on effectue les étapes suivantes :
(i) On fournit une seconde masse d'un second alliage métallique dont la température de fusion T_{F2} est strictement supérieure à la température de fusion T_{F1} du premier alliage,
(j) On chauffe cette seconde masse au-dessus de sa température de fusion de telle sorte que ce second alliage est à l'état liquide et occupe un espace E2, puis on translate la fibre de l'amont vers l'aval au travers du second alliage, cette translation s'effectuant à une seconde vitesse V2 qui est telle que le régime d'emport du second alliage lors de cette translation se situe dans le domaine visco-capillaire, de telle sorte que la fibre se recouvre, sur cette portion de sa longueur, d'un revêtement du second alliage d'épaisseur non nulle sur toute sa périphérie,
(k) On refroidit le revêtement du second alliage jusqu'à ce qu'il devienne solide.

Grâce à ces dispositions, la fibre, étant revêtue du second alliage, est bien mouillée par le premier alliage lors de son passage au travers de ce premier alliage, et le revêtement de premier alliage sur la fibre est d'épaisseur uniforme sur toute la fibre, sans formation de gouttelettes. Il est donc possible de revêtir une fibre de ce premier alliage même à des vitesses élevées (supérieures à 1 m/s) avec une épaisseur de revêtement désirée, et avec une bonne adhérence de ce revêtement et une bonne solidité de la fibre ainsi revêtue.

Avantageusement le second alliage ne forme pas avec le premier alliage de phases fragilisantes.

Ainsi, le second alliage et le premier alliage présentent entre eux une adhérence élevée et résiliente, et le composite résultant tend à être plus résistant.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique d'un dispositif utilisant le procédé selon l'invention pour recouvrir une fibre d'un alliage liquide,
- la figure 2 est une coupe selon la ligne II-II de la figure 1 d'une fibre revêtue d'un alliage en utilisant le procédé selon l'invention,
- la figure 3, déjà décrite, est une vue schématique d'un dispositif utilisant le procédé selon l'art antérieur pour recouvrir une fibre d'un alliage liquide,
- la figure 4, déjà décrite, est une coupe longitudinale d'une fibre revêtue d'un alliage en utilisant le procédé selon l'art antérieur.

On décrit ci-dessous le procédé d'enduction d'une fibre 10 selon l'invention.

Par exemple, les fibres 10 sont en céramique.

En particulier, les fibres 10 sont en SiC (carbure de silicium) entourant un noyau de tungstène ou de carbone.

En général, les fibres 10 présentent chacune une couche de quelques microns d'épaisseur de pyrocarbone. Cette couche est avantageuse car d'une part, elle protège chimiquement la fibre SiC en servant de barrière de diffusion entre la fibre SiC et le matériau métallique souvent très réactif externe à la fibre, et d'autre part, elle protège mécaniquement la fibre SiC contre la propagation de micro-défauts en limitant les effets d'entaille et en permettant de dévier d'éventuelles fissures grâce principalement à la configuration stratifiée de cette fine couche de pyrocarbone. (voir description ci-dessous).

On entend par enduction le dépôt d'un alliage sur un substrat obtenu en déplaçant ce substrat (dans le cas présent une fibre) au contact de cet alliage alors que cet alliage est sous forme liquide, cet alliage étant solide à température ambiante. Le terme alliage inclut le cas d'un métal pur, c'est-à-dire constitué (aux traces d'éléments près) d'un seul élément chimique du tableau périodique des éléments (tableau de Mendeleïev).

On fournit une certaine quantité (première masse) d'un premier alliage, et on chauffe cette première masse 20 de ce premier alliage jusqu'à ce qu'il soit liquide (étape (a)).

Ce chauffage s'effectue en plaçant une quantité de ce premier alliage dans un récipient, par exemple un creuset 30, que l'on chauffe grâce à un chauffage 35 jusqu'à ce que la température en tout point de ce premier alliage soit supérieure à sa température de fusion T_{F1}. De façon connue, la première masse 20 liquide de ce premier alliage est maintenue en lévitation dans le creuset 30, ce qui présente l'avantage que la première masse 20 ne touche pas le creuset 30 et n'est donc pas contaminée par le matériau constituant le creuset 30.

Par exemple, le chauffage 35 est un inducteur disposé autour du creuset 30, cet inducteur maintenant également en lévitation la première masse 20 de ce premier alliage.

Une fois liquide, cette première masse 20 occupe un espace E1, c'est à dire que la première masse 20 remplit tout cet espace E1 mais n'en déborde pas.

Si ce premier alliage n'est pas un métal pur, la température de fusion T_{F} est la température de liquidus pour la composition donnée de cet alliage.

Le premier alliage métallique est un alliage de titane Ti-6242 de composition massique 6% Al + 2% Sn + 4% Zn + 2% Mo, le reste étant Ti.

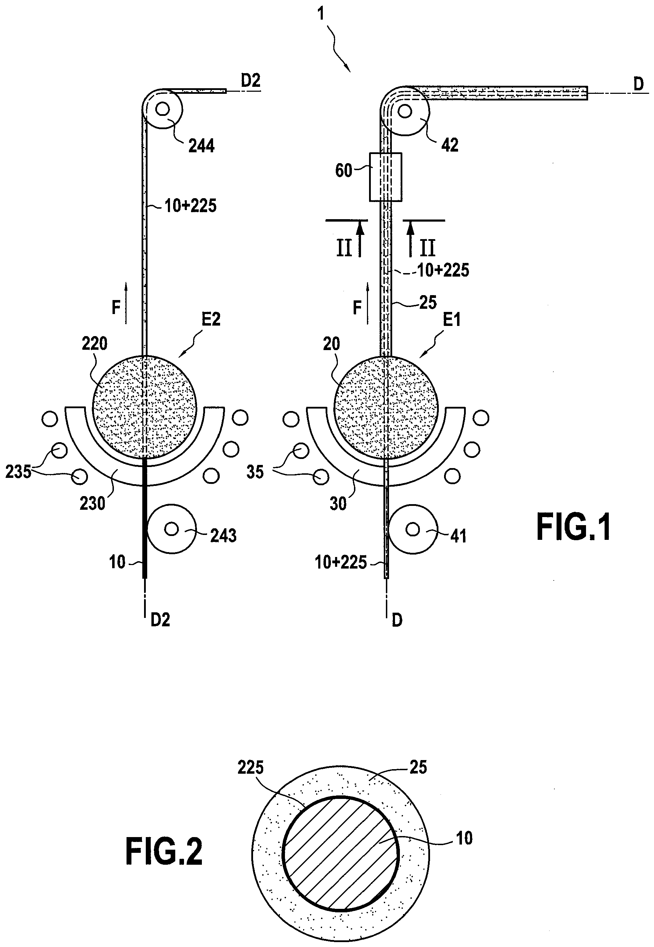

Une fibre 10 est placée de telle sorte qu'elle s'étend entre une poulie amont 41 et une poulie aval 42, par rapport auxquelles elle est apte à coulisser depuis la poulie amont 41 vers la poulie aval 42 selon une direction indiquée par la flèche F sur la figure 1.

Ainsi, la fibre 10 se translate selon la direction principale D dans laquelle elle s'étend, de telle sorte qu'entre un premier instant t1 et un instant ultérieur t2 une première section S1 quelconque de la fibre 10 (hormis son extrémité aval) se déplace pour occuper à l'instant ultérieur t2 le lieu occupé au premier instant t1 par une deuxième section S2 de la fibre 10 située en aval de la première section S1.

Entre deux poulies, la fibre 10 est tendue et s'étend donc selon une direction principale D qui est la même à chaque section transversale de la fibre 10. En d'autres portions de la fibre 10, la fibre 10 n'est pas forcément rectiligne et sa direction principale D varie alors le long de la fibre 10, par exemple autour d'une poulie la fibre 10 (et la direction principale) suit un arc de cercle.

La poulie amont 41 se situe en amont de la masse 20 et la poulie aval 42 se situe en aval de la première masse 20.

La poulie amont 41 et la poulie aval 42 font partie d'un mécanisme d'entrainement 40 de la fibre 10, la fibre 10 étant entrainée par exemple par un moteur (non représenté) inclus dans ce mécanisme d'entrainement 40.

La poulie amont 41 et la poulie aval 42 sont positionnées de telle sorte que la fibre 10, lorsqu'elle s'étend de façon rectiligne d'une poulie à l'autre (c'est-à-dire qu'elle s'étend sur une droite reliant ces deux poulies), passe au travers (au milieu) de la première masse 20 du premier alliage, et donc de l'espace E1 (étape (b)).

Le mécanisme d'entrainement 40 peut comprendre un mécanisme de guidage de la fibre 10 autre que des poulies, du moment que la fibre 10 passe au travers de la première masse 20 comme décrit ci-dessus.

Avantageusement, la direction principale D de la fibre 10 est constante (la fibre 10 est rectiligne) entre un point en amont de l'espace E1 et un point en aval de l'espace E1. Ainsi la fibre tend à conserver une géométrie rectiligne une fois revêtue.

Pour revêtir de premier alliage une portion (par exemple la majorité) de la longueur de la fibre 10, on fait passer cette portion dans la première masse 20 et l'espace E1 comme décrit ci-dessus. Il se dépose alors sur la fibre 10 un revêtement 25 de premier alliage.

La fibre 10 passe au travers de la première masse 20 d'alliage à une première vitesse de translation V1. Dans le procédé selon l'invention, cette première vitesse V1 est supérieure à 2 m/s.

Selon l'invention, avant de procéder à l'enduction de la fibre 10 comme décrit ci-dessus, on effectue une pré-enduction de la fibre 10 (étapes (i), (j), et (k)).

Cette pré-enduction s'effectue de façon similaire à l'enduction décrite ci-dessus, avec cependant des différences.

D'une part cette pré-enduction s'effectue au travers d'une seconde masse 220 liquide d'un second alliage qui est différent du premier alliage de la première masse 20. Ainsi ce second alliage est différent en composition du premier alliage, c'est-à-dire qu'il n'est pas composé des mêmes éléments chimiques, ou il est composé de ces mêmes éléments mais en proportions différentes.

D'autre part cette pré-enduction s'effectue à une vitesse de translation V2 (seconde vitesse V2) qui est telle que le régime d'emport du second alliage lors de cette translation se situe dans le régime visco-capillaire d'emport d'alliage par la fibre 10. Ce régime visco-capillaire correspond au cas où l'épaisseur d'alliage emportée par une fibre (c'est-à-dire se déposant et restant sur la fibre - on parle alors d'emport d'alliage) est proportionnel à la puissance 2/3 de la vitesse V (c'est-à-dire proportionnel à V^{2/3}). L'épaisseur d'alliage emportée en faible, de l'ordre de quelques microns (µm). La vitesse V1 d'enduction est strictement supérieure à la vitesse V2 de pré-enduction, c'est-à-dire que la vitesse V2 de pré-enduction est strictement inférieure à la vitesse V1 d'enduction. Ainsi, on peut déposer sur la fibre 10 un revêtement de premier alliage d'épaisseur désirée, par exemple de l'ordre de 50 µm, et sans formation de gouttelettes le long de la fibre 10. La vitesse V2 est égale à 1 m/s ou inférieure.

Dans certaines configurations, on souhaite que la fraction volumique de fibres 10 dans le composite final (c'est-à-dire une fois les fibres 10 noyées dans la matrice métallique) soit la plus élevée possible, afin d'obtenir des performances mécaniques supérieures. Pour cela, l'épaisseur totale du revêtement déposé sur la fibre 10 lors de la pré-enduction et de l'enduction doit être la plus faible possible. Pour obtenir une épaisseur de premier alliage 25 (déposé lors de l'enduction) la plus faible possible, la première vitesse V1 doit être la plus faible possible. La vitesse V1 est alors dans certains cas inférieure à la seconde vitesse V2, et se situe dans le régime visco-capillaire.

La figure 1 montre, de façon schématique, la fibre 10 qui subit ce procédé de pré-enduction par ce second alliage, la seconde masse 220 du second alliage étant située dans un creuset 230 chauffé par un chauffage 235 à une température supérieure à sa température de fusion T_{F2}. La fibre 10 s'étire entre une troisième poulie 243 située en amont de la seconde masse 220 et une quatrième poulie 244 située en aval de la seconde masse 220. La fibre est translatée de la poulie amont 243 à la poulie aval 244 et passe au travers de la seconde masse 220 du second alliage, qui occupe un espace E2. La fibre s'étend selon une direction principale D2.

Pendant que la seconde masse 220 d'alliage est chauffée, la partie de la fibre 10 entre la troisième poulie 243 et la quatrième poulie 244 est maintenue écartée de la masse 20 d'alliage grâce à une poulie intermédiaire (non représentée), puis elle est rapprochée de la seconde masse 220 d'alliage (selon un procédé similaire à celui pour la poulie 148 en référence à la figure 3).

Etant donné que la seconde vitesse V2 se situe dans le régime visco-capillaire, il y a un bon mouillage de la fibre 10 par le second alliage, et une pénétration totale de la fibre dans la seconde masse 220. En sortant de la seconde masse 220, la fibre 10 présente, sur toute sa circonférence et sur toute la longueur de la portion que l'on souhaite revêtir, un revêtement 225 de second alliage d'épaisseur sensiblement constante. Cette épaisseur est faible devant le diamètre de la fibre 10, c'est-à-dire inférieure à un dixième de ce diamètre.

Une fois toute la portion de fibre 10 que l'on souhaite revêtir revêtue par le second alliage, on laisse ce revêtement se refroidir de façon qu'il devienne solide (étape (k)).

Pour accélérer ce refroidissement, on utilise avantageusement un refroidisseur qui refroidit le second alliage sur cette portion de fibre 10.

Ce refroidisseur est donc situé sur le trajet de la fibre 10 en aval de l'espace E2 (et en amont du dispositif d'enduction ultérieur, et le cas échéant de la quatrième poulie 244, de telle sorte que le second alliage est solide lorsqu'il contacte cette quatrième poulie 244).

Ce refroidisseur est par exemple une gaine au travers de laquelle passe la fibre 10, et qui émet un flux de gaz ou d'air (par exemple à température ambiante) qui baigne l'intérieur de cette gaine et la fibre 10 de façon à la refroidir.

On procède ensuite à l'enduction de la fibre 10 (revêtue de ce revêtement 225 du second alliage) par le premier alliage. Pour cela, on fait passer la fibre 10 au travers de la première masse 20 du premier alliage à une vitesse V1, selon le procédé décrit ci-dessus.

En sortant de la première masse 20, le revêtement 225 de second alliage sur la fibre 10 présente, sur toute sa circonférence et sur toute la longueur de la portion que l'on souhaite revêtir, un revêtement 25 de premier alliage d'épaisseur sensiblement constante.

Etant donné que la poulie aval 42 touche la fibre 10 munie du revêtement 25, il est nécessaire que le revêtement 25 soit solide lorsqu'il entre en contact avec la poulie aval 42.

Après enduction, pour refroidir suffisamment le revêtement 25 de façon qu'il soit solide lorsqu'il entre en contact avec la poulie aval 42, on utilise un refroidisseur 60, ce refroidisseur étant alors situé en aval de l'espace E1 et en amont de la poulie 42. Ce refroidisseur est par exemple similaire au refroidisseur en aval de la pré-enduction, décrit ci-dessus).

Le second alliage présente une température de fusion T_{F2} qui est supérieure à la température de fusion T_{F1} du premier alliage.

En effet, de façon surprenante, les essais effectués par les inventeurs ont montré que lorsque la température de fusion T_{F2} du second alliage est inférieure à la température de fusion T_{F1} du premier alliage, le revêtement 25 du premier alliage et la fibre 10 sont susceptibles d'être fragilisés. De plus, le revêtement 25 de premier alliage ne mouille pas de façon uniforme la surface du revêtement 225 de second alliage, c'est-à-dire que certaines parties du revêtement 225 de second alliage ne sont pas recouvertes par le premier alliage.

Ceci est dû au fait que, lors du passage au travers de la masse du premier alliage (enduction), le second alliage est chauffé au-dessus de sa température de fusion T_{F2} et il se produit une refusion et une dissolution du second alliage (déposé durant la pré-enduction) dans le premier alliage et une rétraction par effet capillaire du second alliage qui met à nu la surface de la fibre 10. De plus le second alliage, étant sous forme liquide, réagit avec le premier alliage, qui est également liquide, pour former des composés chimiques qui, lors du refroidissement ultérieur du premier alliage et du second alliage, fragilisent le revêtement 25 du premier alliage et la fibre 10.

Par exemple, dans le cas d'une fibre en carbure de silicium SiC destinée à être noyée dans une matrice d'alliage de titane Ti-6242 (premier alliage) dont la température de fusion T_{F1} est 1670°C, avec un second alliage zirconium-vanadium Zr-V dont la température de fusion T_{F2} est 1500°C, on observe après pré-enduction (étape (k)) la formation lors de l'enduction (étape (b)) de carbures (Zr,Ti-C) autour de la fibre 10 et aux anciens joints de grains β du premier alliage de titane.

Ces carbures fragilisent le revêtement 25 de premier alliage. De plus, la remise en fusion du revêtement 225 de second alliage tend à fragiliser la fibre 10.

De façon surprenante, les essais effectués par les inventeurs ont montré que lorsque la température de fusion T_{F2} du second alliage est égale à la température de fusion T_{F1} du premier alliage, c'est-à-dire lorsque le second alliage et le premier alliage sont identiques, la fibre 10 n'est pas totalement recouverte d'alliage.

Ceci est dû au fait que la couche d'alliage déposée sur la fibre 10 lors de la pré-enduction est mince (de par la faible vitesse de passage de la fibre au travers de l'alliage) et tend à se fracturer pendant son refroidissement ultérieur. En outre, il peut se produire une dissolution de cette couche lors de l'enduction ultérieure. En conséquence, l'enduction effectuée ensuite n'est pas efficace, le mouillage des régions à nu de la fibre 10 étant mauvais.

Par exemple, dans le cas d'une fibre en carbure de silicium SiC destinée à être noyée dans une matrice d'alliage de titane Ti-6242, après la pré-enduction il se forme une couche fragile de TiC à la surface de la fibre 10. Lors du refroidissement ultérieur, cette couche se fracture de par sa faible épaisseur. Ainsi, il se produit une décohésion entre la fibre 10 et le revêtement 225 du second alliage, laissant des régions de la fibre 10 à nu. Le mouillage de ces régions à nu de la fibre 10 lors de l'enduction est mauvais, et la fibre 10 n'est en conséquence pas recouverte d'alliage par endroits.

En revanche, lorsqu'on effectue une pré-enduction avec un second alliage dont la température de fusion T_{F2} est strictement supérieure à la température de fusion T_{F1} du premier alliage utilisé lors de l'enduction ultérieure, alors on obtient un revêtement 25 de premier alliage d'épaisseur uniforme sur toute la surface du revêtement 225 de second alliage qui recouvre la fibre 10, c'est-à-dire sur toute la périphérie de la fibre 10 dans un plan perpendiculaire à la direction principale D.

Cette situation est illustrée sur la figure 2, qui est une coupe transversale d'une fibre 10 (c'est-à-dire une coupe dans un plan perpendiculaire à la direction dans laquelle cette partie de la fibre 10 s'étend (direction principale D)) après son enduction.

Lors de la pré-enduction il y a un bon mouillage du second alliage sur la fibre 10 car la seconde vitesse V2 est faible.

Lors de l'enduction ultérieure au travers du premier alliage, il y a un bon mouillage du premier alliage sur le revêtement 225 de second alliage, et il se forme sur toute la surface du revêtement 225 de ce second alliage un revêtement 25 de premier alliage d'épaisseur uniforme et qui est adhérent. De par la température de fusion T_{F2} du second alliage plus élevée que la température de fusion T_{F1} du premier alliage, le revêtement 225 de ce second alliage reste solide pendant l'enduction, ce qui protège la fibre 10. Lorsqu'elle est présente, la couche de pyrocarbone à la surface de la fibre 10 n'est pas endommagée lors de cette enduction.

Ainsi, on améliore le mouillage de la fibre 10 par le premier alliage (par rapport à un procédé sans pré-enduction selon l'art antérieur) ce qui permet à la fibre 10 de pénétrer totalement à l'intérieur de la première masse 20 d'alliage même à des vitesses élevées (de plusieurs mètres par seconde), et ainsi d'être recouverte sur toute sa surface, sans formation de gouttelettes.

Avantageusement, le second alliage (de pré-enduction) ne forme pas avec le premier alliage (d'enduction) de phases fragilisantes.

Ainsi, l'interface entre le revêtement du second alliage et le revêtement du premier alliage ne présente pas de phases (c'est-à-dire de phase métallurgique ou de composés) qui fragilisent cette interface, et cette interface ne risque pas d'être une zone génératrice de fractures ou de décohésion entre ces revêtements.

Par exemple, le second alliage (de pré-enduction) contient au moins un élément chimique qui est présent dans le premier alliage (d'enduction).

Ainsi, la matrice (en premier alliage) du composite n'est pas modifiée chimiquement de façon préjudiciable au voisinage de la fibre 10.

Alternativement, cet élément chimique a un rôle bétagène sur le titane, c'est-à-dire qu'il présente une structure cristalline cubique centrée comme celle du niobium. Alternativement, cet élément chimique a un rôle alphagène. Dans le cas d'une fibre en carbure de silicium SiC destinée à être noyée dans une matrice d'alliage de titane Ti-6242 (premier alliage) dont la température de fusion T_{F1} est 1670°C, on choisit comme second alliage du titane-niobium Ti-Nb (51% massique de Ti, 49% massique de Nb) dont la température de fusion T_{F2} est 1870°C.

Lors de la pré-enduction il y a un bon mouillage du second alliage sur la fibre 10 car la seconde vitesse V2 est faible (environ égale à 1 m/s ou inférieure), et il se forme sur toute la surface de la fibre 10 un revêtement 225 de ce second alliage d'épaisseur constante de 4 µm et qui est adhérent sur la fibre 10. Ce revêtement 225 est constitué de grains de titane de phase beta avec des carbures TiC et NbC aux joints de grains.

Lors de l'enduction ultérieure, l'alliage Ti-Nb est bien mouillé par l'alliage de titane. Il se produit peu de diffusion de niobium dans le titane, ce qui permet d'éviter l'apparition d'un phénomène de surfusion tel qu'un phénomène d'eutectique (passage à l'état liquide d'une partie de l'alliage).

Avantageusement, la teneur en niobium dans le second alliage est supérieure à 3% afin d'obtenir de la phase beta dans le titane du second alliage (en dessous le titane est entièrement en phase alpha), et inférieure à 50% afin d'éviter une surchauffe de la fibre 10 lors de la pré-enduction (car la température de fusion T_{F2} augmente avec le pourcentage de niobium).

Les alliages autres que Nb-Ti qui sont adaptés pour la pré-enduction de fibres en SiC dans le cas où le premier alliage est un alliage de titane sont des alliages de titane et d'un (ou plusieurs) élément additionnel qui est présent dans ce premier alliage. La température de fusion de cet élément additionnel est supérieure à la température de fusion T_{F1} du premier alliage.

Avantageusement, cet élément additionnel ne forme pas d'eutectique avec le titane, au contraire il forme une solution solide totale (une phase solide unique en dessous de la température de solidus sur le diagramme des phases), ou bien il génère une réaction péritectique.

De tels éléments additionnels sont : le zirconium (Zr), le chrome (Cr), le vanadium (Va), le hafnium (Hf), le molybdène (Mo), le tantale (Ta), le rhénium (Re), le tungstène (W).

Ainsi, avantageusement, dans le cas où le premier alliage est l'alliage de titane Ti-6242, le second alliage (de pré-enduction) comprend au moins un des éléments du groupe constitué de Nb, Zr, Cr, V, Hf, Mo, Ta, Re, W.

Le second alliage peut ainsi être un alliage du titane avec plusieurs des éléments de ce groupe, tel que Ti-Nb-Zr, Ti-Nb-V, Ti-Ta-Zr.

Selon une variante, après la pré-enduction de la fibre 10 avec le second alliage et avant l'enduction de la fibre 10 avec le premier alliage, on effectue une seconde pré-enduction de la fibre 10 (revêtue de ce second alliage) avec un troisième alliage dont la température de fusion T_{F3} est strictement inférieure à la température de fusion T_{F2} du second alliage et strictement supérieure à la température de fusion TF1 du premier alliage.

Ainsi, après l'étape (k) et avant l'étape (a), on effectue les étapes suivantes :
(l) On fournit une troisième masse d'un troisième alliage métallique dont la température de fusion T_{F3} est strictement inférieure à la température de fusion T_{F2} du second alliage et est strictement supérieure à la température de fusion T_{F1} du premier alliage,
(m) On chauffe la troisième masse au-dessus de sa température de fusion de telle sorte que ce troisième alliage est à l'état liquide et occupe un espace E3, puis on translate la fibre de l'amont vers l'aval au travers du troisième alliage, cette translation s'effectuant à une troisième vitesse V3 qui est supérieure à la seconde vitesse V2 inférieure à la première vitesse V1 et qui est telle que le régime d'emport du troisième alliage lors de cette translation se situe dans le domaine visco-capillaire, de telle sorte que la fibre se recouvre, sur la portion de sa longueur (déjà revêtue du second alliage), d'un revêtement du troisième alliage d'épaisseur non nulle sur toute sa périphérie,
(n) On refroidit le revêtement du troisième alliage jusqu'à ce qu'il devienne solide.

Le procédé selon l'invention est applicable à toute combinaison de fibres, en particulier de fibres céramiques, et d'alliage métallique qui est la matrice dans laquelle ces fibres sont noyées.

## Revendications

1. Procédé de dépôt d'un revêtement d'un premier alliage métallique sur une fibre (10) s'étendant selon une direction principale D, comprenant les étapes suivantes :
(a) On fournit une première masse (20) d'un premier alliage métallique et on chauffe ladite première masse (20) au-dessus de sa température de fusion de telle sorte que cet alliage est à l'état liquide et occupe un espace E1, ledit premier alliage est l'alliage de titane Ti-6242 de composition massique 6% Al + 2% Sn + 4% Zn + 2% Mo, le reste étant Ti,
(b) On translate ladite fibre (10) de l'amont vers l'aval au travers de la dite première masse (20) liquide selon la direction dans laquelle ladite fibre (10) s'étend à une première vitesse V1, supérieure à 2 m/s, de telle sorte que ladite fibre (10) se recouvre, sur au moins une portion de sa longueur, d'un revêtement (25) dudit premier alliage d'épaisseur non nulle sur toute sa périphérie dans un plan perpendiculaire à ladite direction principale D,
ledit procédé étant **caractérisé en ce que**, avant l'étape (a), on effectue les étapes suivantes :
(i) On fournit une seconde masse (220) d'un second alliage métallique dont la température de fusion T_{F2} est strictement supérieure à la température de fusion T_{F1} dudit premier alliage, ledit second alliage est du titane-niobium Ti-Nb de composition massique 51% massique de Ti et, 49% massique de Nb,
(j) On chauffe ladite seconde masse (220) au-dessus de sa température de fusion de telle sorte que ce second alliage est à l'état liquide et occupe un espace E2, puis on translate ladite fibre (10) de l'amont vers l'aval au travers dudit second alliage, cette translation s'effectuant à une seconde vitesse V2, inférieure ou égale à 1 m/s, qui est telle que le régime d'emport dudit second alliage lors de cette translation se situe dans le domaine visco-capillaire, de telle sorte que ladite fibre (10) se recouvre, sur ladite portion de sa longueur, d'un revêtement (225) dudit second alliage d'épaisseur non nulle sur toute sa périphérie,
(k) On refroidit ledit revêtement (225) du second alliage jusqu'à ce qu'il devienne solide.

2. Procédé selon la revendication 1, **caractérisé en ce que** ledit second alliage ne forme pas avec ledit premier alliage de phases fragilisantes.

3. Procédé selon la revendication 2 **caractérisé en ce que** ledit second alliage contient au moins un élément chimique qui est présent dans ledit premier alliage.

## Patentansprüche

1. Verfahren zum Aufbringen einer Beschichtung aus einer ersten Metalllegierung auf eine sich in einer Hauptrichtung D erstreckende Faser (10), umfassend die folgenden Schritte:
(a) Bereitstellen einer ersten Masse (20) einer ersten Metalllegierung und Erhitzen der ersten Masse (20) über ihre Schmelztemperatur, sodass die Legierung in einem flüssigen Zustand ist und einen Raum E1 einnimmt, wobei die erste Legierung eine Legierung von Titan Ti-6242 mit einer Massenzusammensetzung von 6 % Al + 2 % Sn + 4 % Zn + 2 % Mo und Rest Ti darstellt,
(b) Verschieben der Faser (10) von stromaufwärts nach stromabwärts durch die erste flüssige Masse (20) in der Richtung, in der sich die Faser (10) mit einer ersten Geschwindigkeit V1, größer als 2 m/s, erstreckt, sodass die Faser (10) über mindestens einen Teil ihrer Länge mit einer Beschichtung (25) der ersten Legierung mit einer Dicke ungleich Null über ihren gesamten Umfang in einer Ebene senkrecht zur Hauptrichtung D bedeckt wird,
wobei das Verfahren **dadurch gekennzeichnet ist, dass** vor Schritt (a) die folgenden Schritte ausgeführt werden:
(i) Bereitstellen einer zweiten Masse (220) einer zweiten Metalllegierung, deren Schmelztemperatur T_{F2} strikt höher als die Schmelztemperatur T_{F1} der ersten Legierung ist, wobei die zweite Legierung eine Legierung von Titan-Niob Ti-Nb mit einer Massenzusammensetzung von 51 Masse-% Ti und 49 Masse-% Nb darstellt,
(j) Erhitzen der zweiten Masse (220) über ihre Schmelztemperatur, so dass die zweite Legierung in einem flüssigen Zustand ist und einen Raum E2 einnimmt, dann Verschieben der Faser (10) von stromaufwärts nach stromabwärts durch die zweite Legierung, wobei das Verschieben mit einer zweiten Geschwindigkeit V2 erfolgt, die kleiner oder gleich 1 m/s ist, sodass die Mitführgeschwindigkeit der zweiten Legierung während dieser Verschiebung im visko-kapillaren Bereich liegt, sodass die Faser (10) über den Teil ihrer Länge mit einer Beschichtung (225) der zweiten Legierung mit einer Dicke ungleich Null über ihren gesamten Umfang bedeckt wird,
(k) Abkühlen der Beschichtung (225) der zweiten Legierung, bis sie fest wird.

2. Verfahren gemäß Anspruch 1, **dadurch gekennzeichnet, dass** die zweite Legierung mit der ersten Legierung keine spröden Phasen bildet.

3. Verfahren gemäß Anspruch 2, **dadurch gekennzeichnet, dass** die zweite Legierung mindestens ein chemisches Element enthält, das in der ersten Legierung vorhanden ist.

## Claims

1. A method of depositing a coating of a first metal alloy on a fiber (10) extending in a main direction D, the method comprising the following steps:
a) providing a first mass (20) of a first metal alloy and heating said first mass (20) to above its melting temperature so that this alloy is in the liquid state and occupies a space E1; the first metal alloy is the Ti-6242 titanium alloy having the following composition by weight 6%Al + 2%Sn + 4%Zn + 2%Mo, the balance being Ti,
b) causing said fiber (10) to move in translation from upstream to downstream through said liquid first mass (20) along the direction in which said fiber (10) extends at a first speed V1, faster than 2 m/s, such that said fiber (10) becomes covered over at least a portion of its length by a coating (25) of said first alloy, which coating presents a non-zero thickness over the entire periphery of the fiber in a plane perpendicular to said main direction D,
which method is **characterized in that**, prior to step a), the following steps are performed:
i) providing a second mass (220) of a second metal alloy having a melting temperature T_{F2} that is strictly higher than the melting temperature T_{F1} of said first alloy, the second metal alloy is a titanium niobium alloy (Ti-Nb) comprising 51% by weight of Ti and 49% by weight of Nb;
j) heating said second mass (220) to above its melting temperature so that the second alloy is in the liquid state and occupies a space E2, and then moving said fiber (10) in translation from upstream to downstream through said second alloy, this translation taking place at a second speed V2, equal to 1 m/s or slower, which is such that the condition under which the second alloy is taken up during this translation lies under visco-capillary conditions, such that the fiber (10) becomes covered, over said portion of its length, by a coating (225) of said second alloy, which coating presents a non-zero thickness over the entire periphery of the fiber; and
k) cooling said coating (225) of the second alloy until it becomes solid.

2. The method according to claim 1, **characterized in that** said second alloy does not form embrittling phases with said first alloy.

3. The method according to claim 2, **characterized in that** said second alloy contains at least one chemical element that is present in said first alloy.
